# EUROPEAN PATENT APPLICATION

(11) **EP 1 684 167 A2**
(43) Date of publication of application: **26.07.2006**
(21) Application number: 06113227.0
(22) Date of filing: 30.04.2004
(51) Int. Cl.: G06F 9/355, G06F 9/318

(54) **Method of processing signed displacement computer instruction**

(62) Divisional of application: 05108499.4
(71) Applicant: International Business Machines Corporation, Armonk, N.Y. 10504 (US)
(72) Inventor: Check, Mark, Winchester, Hampshire SO21 2JN (GB); Moore, Brian, Winchester, Hampshire SO21 2JN (GB); Slegel, Timothy, Winchester, Hampshire SO21 2JN (GB)
(74) Representative: Williams, Julian David

(57) **Abstract**

A method, system and computer program product for computing a message authentication code for data in storage of a computing environment. An instruction specifies a unit of storage for which an authentication code is to be computed. An computing operation computes an authentication code for the unit of storage.

## Description

This invention relates to computer system architecture and particularly to new instructions which augment the IBM z/Architecture and can be emulated by other architectures.

Before our invention IBM has created through the work of many highly talented engineers beginning with machines known as the IBM System 360 in the 1960s to the present, a special architecture which, because of its essential nature to a computing system, became known as "the mainframe" whose principles of operation state the architecture of the machine by describing the instructions which may be executed upon the "mainframe" implementation of the instructions which had been invented by IBM inventors and adopted, because of their significant contribution to improving the state of the computing machine represented by "the mainframe", as significant contributions by inclusion in IBM's Principles of Operation as stated over the years. The First Edition of the *z*/*Architecture Principles of Operation* which was published December, 2000 has become the standard published reference as SA22-7832-00.

We determined that further new instructions would assist the art and could be included in a z/Architecture machine and also emulated by others in simpler machines, as described herein.

The present invention provides a method as claimed in claim 1.

The features of the preferred embodiments of the invention will be apparent to one skilled in the art from the following detailed description taken in conjunction with the accompanying drawings in which:
Fig. 1 is an illustration of the Compute Message Authentication Code (KMAC) instruction in the RRE instruction format;
Fig. 2 is a table showing the function codes for the KMAC instruction of Fig. 1;
Fig. 3 is an illustration of the general register assignment for the KMAC instruction of Fig. 1;
Fig. 4 illustrates the symbol used for Fit-Wise Exclusive Or;
Fig. 5 illustrates symbol for DEA Encryption and Decryption;
Fig. 6 illustrates the format for the parameter block for KMAC-Query;
Fig. 7 illustrates the format for the parameter block for KMAC-DEA;
Fig. 8 illustrates the operation of KMAC-DEA;
Fig. 9 illustrates the format for the parameter block for KMAC-TDEA-128;
Fig. 10 illustrates the operation of KMAC-TDEA-128;
Fig. 11 illustrates the format for the parameter block for KMAC-TDEA-192;
Fig. 12 illustrates the operation of KMAC-TDEA-192;
Fig. 13 is a table showing the priority of execution for KMAC;
Fig. 14 illustrates our cryptographic coprocessor; and
Fig. 15 shows the generalized preferred embodiment of a computer memory storage containing instructions in accordance with the preferred embodiment and data, as well as the mechanism for fetching, decoding and executing these instructions, either on a computer system employing these architected instructions or as used in emulation of our architected instructions.

The COMPUTE MESSAGE AUTHENTICATION CODE (KMAC) instruction will be discussed first, and then a preferred computer system, and, in the alternative, a computer system for emulating a computer system haveing a different architecture for executing the instruction.

### COMPUTE MESSAGE AUTHENTICATION CODE (KMAC)

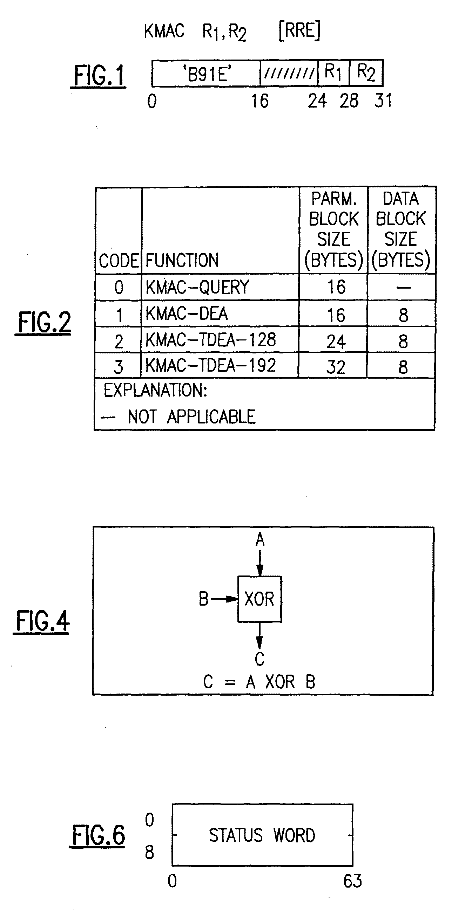

Fig. 1 is an illustration of the Compute Message Authentication Code (KMAC) instruction in the RRE instruction format.

A function specified by the function code in general register 0 is performed. Bits 16-23 of the instruction and the R1 field are ignored.

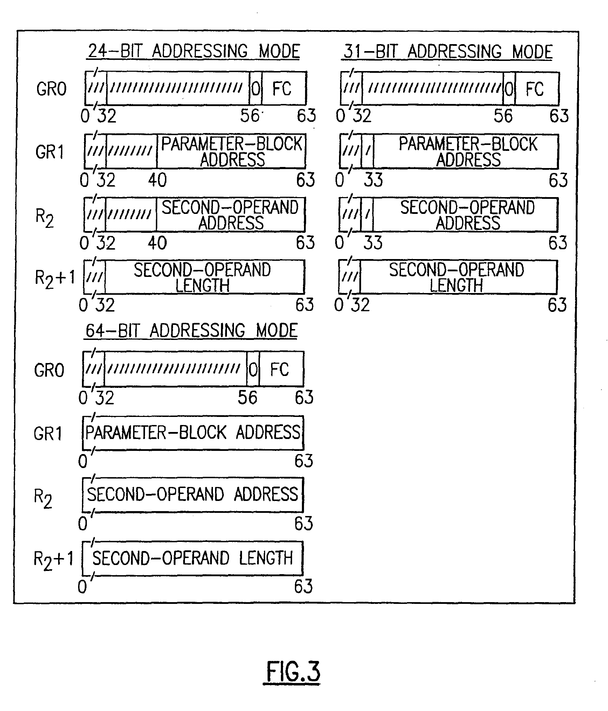

Bit positions 57-63 of general register 0 contain the function code. Fig. 2 shows the assigned function codes. All other function codes are unassigned. Bit 56 of general register 0 must be zero; otherwise, a specification exception is recognized. All other bits of general register 0 are ignored.

General register 1 contains the logical address of the leftmost byte of the parameter block in storage. In the 24-bit addressing mode, the contents of bit positions 40-63 of general register 1 constitute the address, and the contents of bit positions 0-39 are ignored. In the 31-bit addressing mode, the contents of bit positions 33-63 of general register 1 constitute the address, and the contents of bit positions 0-32 are ignored.
In the 64-bit addressing mode, the contents of bit positions 0-63 of general register 1 constitute the address.

The function codes for COMPUTE MESSAGE AUTHENTICATION CODE are shown in Fig. 2.

All other function codes are unassigned. The query function provides the means of indicating the availability of the other functions. The contents of general registers R2 and R2 + 1 are ignored.

For all other functions, the second operand is processed as specified by the function code using an initial chaining value in the parameter block and the result replaces the chaining value. The operation also uses a cryptographic key in the parameter block. The operation proceeds until the end of the second-operand location is reached or a CPU-determined number of bytes have been processed, whichever occurs first. The result is indicated in the condition code.

The R2 field designates an even-odd pair of general registers and must designate an even numbered register; otherwise, a specification exception is recognized.

The location of the leftmost byte of the second operand is specified by the contents of the R2 general register. The number of bytes in the second-operand location is specified in general register R2 + 1.

As part of the operation, the address in general register R2 is incremented by the number of bytes processed from the second operand, and the length in general register R2 + 1 is decremented by the same number. The formation and updating of the address and length is dependent on the addressing mode.

In the 24-bit addressing mode, the contents of bit positions 40-63 of general register R2 constitute the address of second operand, and are ignored; bits 40-63 of the updated address replace the corresponding bits in general register R_, carries out of bit position 40 of the updated address are ignored and, the contents of bit positions 32-39 of general register R_ are set to zeros. In the 31-bit addressing mode, the contents of bit positions 33-63 of general register R_ constitute the address of second operand, and the contents of bit positions 0-32 are ignored; bits 33-63 of the updated address replace the corresponding bits in general register R_, carries out of bit position 33 of the updated address are ignored, and the content of bit position 32 of general register R_ is set to zero. In the 64-bit addressing mode, the contents of bit positions 0-63 of general register R_ constitute the address of second operand; bits 0-63 of the updated address replace the contents of general register R_ and carries out of bit position 0 are ignored.

In both the 24-bit and the 31-bit addressing modes, the contents of bit positions 32-63 of general register R2 + 1 form a 32-bit unsigned binary integer which specifies the number of bytes in the second operand; and the updated value replaces the contents of bit positions 32-63 of general register R2 + 1. In the 64-bit addressing mode, the contents of bit positions 0-63 of general register R2 + 1 form a 64-bit unsigned binary integer which specifies the number of bytes in the second operand; and the updated value replaces the contents of general register R2 + 1.

In the 24-bit or 31-bit addressing mode, the contents of bit positions 0-31 of general registers R2 and R2 + 1, always remain unchanged.

Fig. 3 shows the contents of the general registers just described.

In the access-register mode, access registers 1 and R2 specify the address spaces containing the parameter block and second operand, respectively. The result is obtained as if processing starts at the left end of the second operand and proceeds to the right, block by block. The operation is ended when all source bytes in the second operand have been processed (called normal completion), or when a CPU-determined number of blocks that is less than the length of the second operand have been processed (called partial completion). The CPU-determined number of blocks depends on the model, and may be a different number each time the instruction is executed. The CPU-determined number of blocks is usually nonzero. In certain unusual situations, this number may be zero, and condition code 3 may be set with no progress. However, the CPU protects against endless reoccurrence of this no-progress case.

When the chaining-value field overlaps any portion of the second operand, the result in the chaining value field is unpredictable.

Normal completion occurs when the number of bytes in the second operand as specified in general register R + 1 have been processed.

When the operation ends due to normal completion, condition code 0 is set and the resulting value in R2 + 1 is zero. When the operation ends due to partial completion, condition code 3 is set and the resulting value in R2 + 1 is nonzero.

When the second-operand length is initially zero, the second operand and the parameter block are not accessed, general registers R2 and R2 + 1 are not changed, and condition code 0 is set.

As observed by other CPUs and channel programs, references to the parameter block and storage operands may be multiple-access references, accesses to these storage locations are not necessarily block-concurrent, and the sequence of these accesses or references is undefined.

Access exceptions may be reported for a larger portion of the second operand than is processed in a single execution of the instruction; however, access exceptions are not recognized for locations beyond the length of the second operand nor for locations more than 4K bytes beyond the current location being processed.

### Symbols Used in Function Descriptions

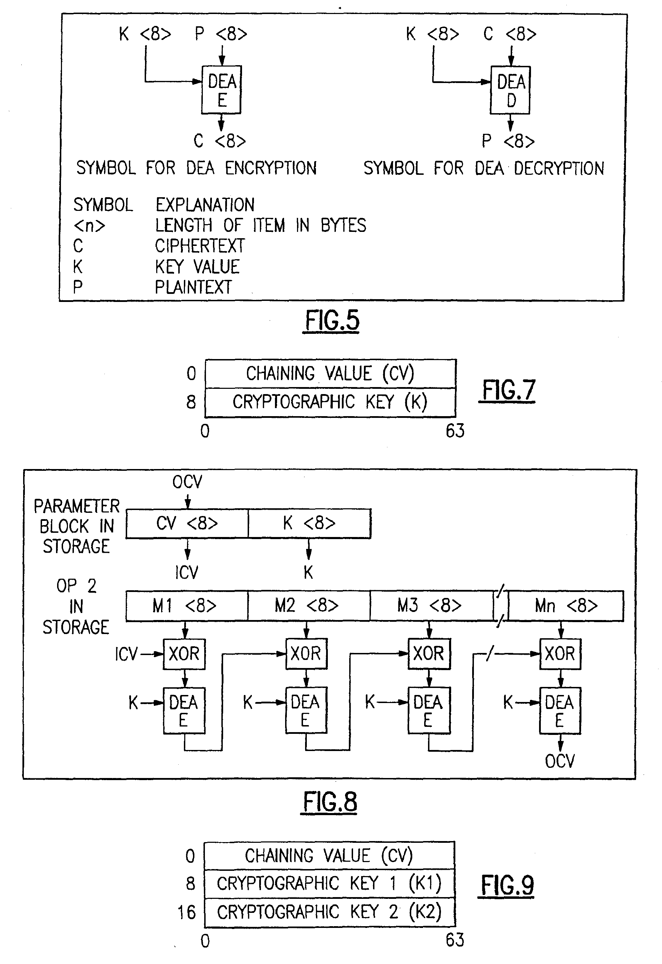

The symbols of Figs. 4 and 5 are used in the subsequent description of the COMPUTE MESSAGE AUTHENTICATION CODE functions. For data-encryption-algorithm (DEA) functions, the DEA-key-parity bit in each byte of the DEA key is ignored, and the operation proceeds normally, regardless of the DEA-key parity of the key.

Further description of the data-encryption algorithm may be found in *Data Encryption Algorithm*, ANSI-X3.92.1981, American National Standard for Information Systems.

### KMAC-Query (Function Code 0)

The locations of the operands and addresses used by the instruction are as shown in Fig. 3. The parameter block used for the KMAC-Query function has the format shown in Fig. 6.

A 128-bit status word is stored in the parameter block. Bits 0-127 of this field correspond to function codes 0-127, respectively, of the KMAC instruction. When a bit is one, the corresponding function is installed; otherwise, the function is not installed.

Condition code 0 is set when execution of the KMAC-Query function completes; condition code 3 is not applicable to this function.

### KMAC-DEA (Function Code 1)

The locations of the operands and addresses used by the instruction are as shown in Fig. 3.

The parameter block used for the KMAC-DEA function has the format shown in Fig. 7.

The message authentication code for the 8-byte message blocks (M1, M2, ..., Mn) in operand 2 is computed using the DEA algorithm with the 64-bit cryptographic key and the 64-bit chaining value in the parameter block.

The message authentication code, also called the output chaining value (OCV), is stored in the chaining-value field of the parameter block. The KMAC-DEA operation is shown in Fig. 8.

### KMAC-TDEA-128 (Function Code 2)

The locations of the operands and addresses used by the instruction are as shown in Fig. 3.

The parameter block used for the KMAC-TDEA-128 function has the format shown in Fig. 9.

The message authentication code for the 8-byte message blocks (M1, M2, ..., Mn) in operand 2 is computed using the TDEA algorithm with the two 64-bit cryptographic keys and the 64-bit chaining value in the parameter block.

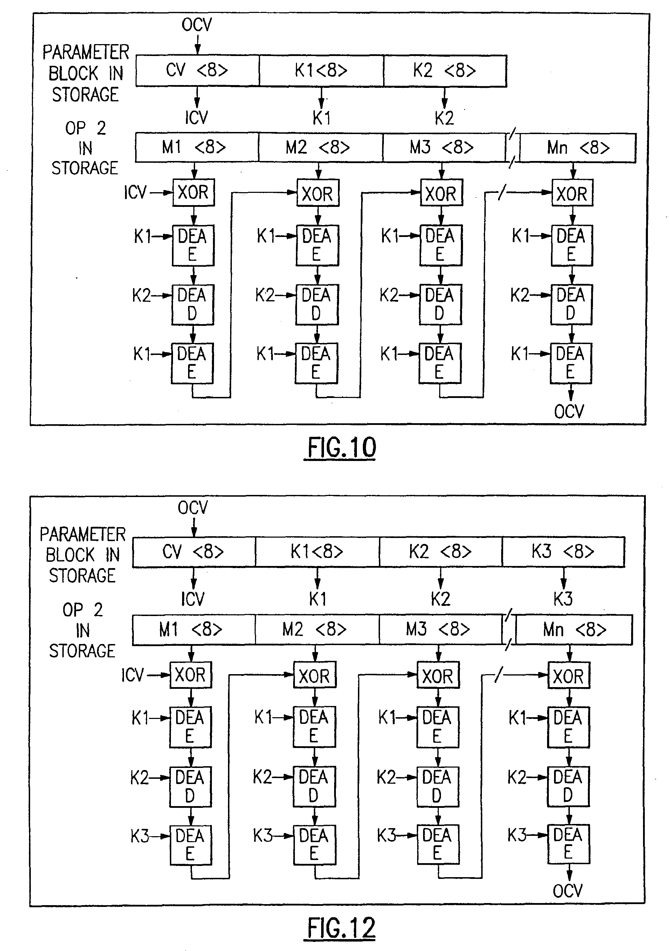

The message authentication code, also called the output chaining value (OCV), is stored in the chaining-value field of the parameter block. The KMAC-TDEA-128 operation is shown in Fig. 10.

### KMAC-TDEA-192 (Function Code 3)

The locations of the operands and addresses used by the instruction are as shown in Fig. 3.

The parameter block used for the KMAC-TDEA-192 function has the format shown in Fig. 11.

The message authentication code for the 8-byte message blocks (M1, M2, ..., Mn) in operand 2 is computed using the TDEA algorithm with the three 64-bit cryptographic keys and the 64-bit chaining value in the parameter block.

The message authentication code, also called the output chaining value (OCV), is stored in the chaining-value field of the parameter block. The KMAC-TDEA-192 operation is shown in Fig. 12.

### Special Conditions for KMAC

A specification exception is recognized and no other action is taken if any of the following occurs:
1. Bit 56 of general register 0 is not zero.
2. Bits 57-63 of general register 0 specify an unassigned or uninstalled function code.
3. The R_ field designates an odd-numbered register or general register 0.
4. The second-operand length is not a multiple of the data block size of the designated function (see Figure 7-54 on page 7-92 to determine the data block size for COMPUTE MESSAGE AUTHENTICATION CODE functions).

### Resulting Condition Code:

0 Normal completion
1 --
2 --
3 Partial completion

### Program Exceptions:

- Access (fetch, operand 2, cryptographic key; fetch and store, chaining value)
- Operation (if the message-security assist is not installed)
- Specification

### Programming Notes:

1. Bit 56 of general register 0 is reserved for future extension and should be set to zero.
2. When condition code 3 is set, the second operand address and length in general registers R2 and R2 + 1, respectively, and the chaining-value in the parameter block are usually updated such that the program can simply branch back to the instruction to continue the operation. For unusual situations, the CPU protects against endless reoccurrence for the no-progress case. Thus, the program can safely branch back to the instruction whenever condition code 3 is set with no exposure to an endless loop.
3. If the length of the second operand is nonzero initially and condition code 0 is set, the registers are updated in the same manner as for condition code 3; the chaining value in this case is such that additional operands can be processed as if they were part of the same chain.
4. Before processing the first part of a message, the program must set the initial values for the chaining-value field. To comply with ANSI X9.9 or X9.19, the initial chaining value shall be set to all binary zeros.

### CRYPTO COPROCESSOR:

The preferred embodiment provides a crypto coprocessor which can be used with the instructions described herein and to execute cipher messages and assist in a variety of chaining message tasks which can be employed for chained and cryptographic use with the appropriate instructions.

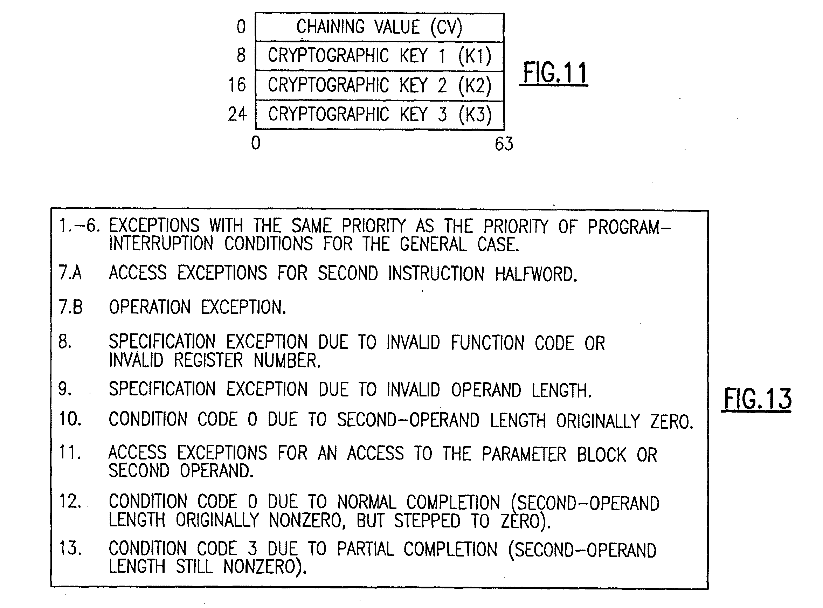

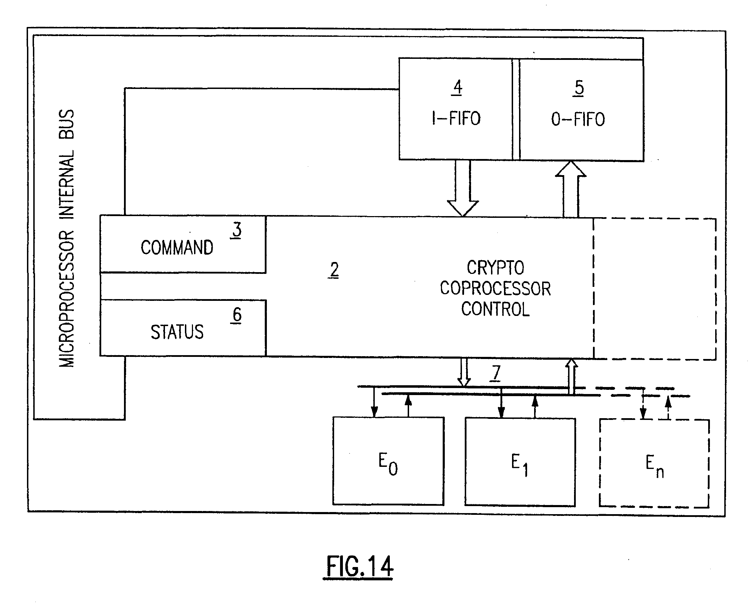

Fig. 14 illustrates our cryptographic coprocessor which is directly attached to a data path common to all internal execution units on the general purpose microprocessor, which has multiple execution pipelines. The microprocessor internal bus (1) is common to all other execution units is attached to the cryptographic control unit (2), and the control unit watches the bus for processor instructions that it should execute.

The cryptographic control unit provides a cryptographic coprocessor directly attached to a data path common to all internal execution units of the central processing unit on a general purpose microprocessor providing the available hardware (E₀ ... Eₙ), or from a combination thereof in the preferred embodiment having multiple execution pipelines) for the central processing unit. When a cryptographic instruction is encountered in the command register (3), the control unit (2) invokes the appropriate algorithm from the available hardware. Operand data is delivered over the same internal microprocessor bus via an input FIFO register (4). When an operation is completed the a flag is set in a status register (6) and the results are available to be read out from the output FIFO register (5).

The illustrated preferred embodiment of our invention is designed to be extensible to include as many hardware engines as required by a particular implementation depending on the performance goals of the system. The data paths to the input and output registers (7) are common among all engines.

The preferred embodiment of the invention cryptographic functions are implemented in execution unit hardware on the CPU and this implementation enables a lower latency for calling and executing encryption operations and increases the efficiency.

This decreased latency greatly enhances the capability of general purpose processors in systems that frequently do many encryption operations, particularly when only small amounts of data are involved. This allows an implementation that can significantly accelerate the processes involved in doing secure online transactions. The most common methods of securing online transactions involve a set of three algorithms. The first algorithm is only used one time in a session, and may be implemented in hardware or software, while the other operations are invoked with every transaction of the session, and the cost in latency of calling external hardware as well as the cost in time to execute the algorithm in software are both eliminated with this invention.

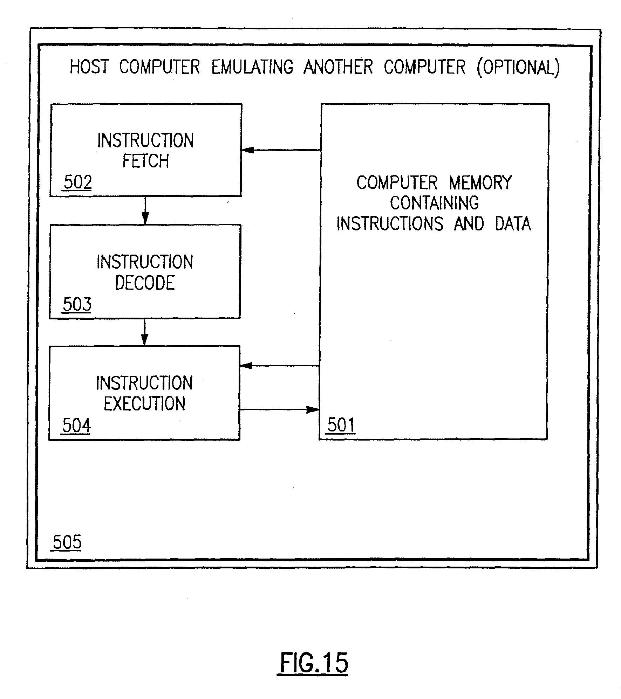

In Fig. 15 we have shown conceptually how to implement what we have in a preferred embodiment implemented in a mainframe computer having the microprocessor described above which can effectively be used, as we have experimentally proven within IBM, in a commercial implementation of the long displacement facility computer architected instruction format the instructions are used by programmers, usually today "C" programmers. These instruction formats stored in the storage medium may be executed natively in a Z/Architecture IBM Server, or alternatively in machines executing other architectures. They can be emulated in the existing and in future IBM mainframe servers and on other machines of IBM (e.g. pSeries Servers and xSeries Servers). They can be executed in machines running Linux on a wide variety of machines using hardware manufactured by IBM, Intel, AMD, Sun Microsystems and others. Besides execution on that hardware under a Z/Architecture, Linux can be used as well as machines which use emulation by Hercules, UMX, FXI or Platform Solutions, where generally execution is in an emulation mode. In emulation mode the specific instruction being emulated is decoded, and a subroutine built to implement the individual instruction, as in a "C" subroutine or driver, or some other method of providing a driver for the specific hardware as is within the skill of those in the art after understanding the description of the preferred embodiment. Various software and hardware emulation patents including, but not limited to US 5551013, US6009261, US5574873, US6308255, US6463582, and US5790825 illustrate the variety of known ways to achieve emulation of an instruction format architected for a different machine for a target machine available to those skilled in the art, as well as those commercial software techniques used by those referenced above.

In the preferred embodiment the existing pre-long displacement instruction formats for a non superscalar instruction form the operand storage address by the summing of the base register and 12 bit unsigned displacement or the base register, the index register, and the 12 bit unsigned displacement and the new long displacement instruction formats form the operand storage address by the summing of the base register and the 20 bit signed displacement or the base register, the index register, and the 20 bit signed displacement.

As illustrated by Fig. 15, these instructions are executed in hardware by a processor or by emulation of said instruction set by software executing on a computer having a different native instruction set.

In Fig. 15, #501 shows a computer memory storage containing instructions and data. The long displacement instructions described in this invention would initially stored in this computer. #502 shows a mechanism for fetching instructions from a computer memory and may also contain local buffering of these instructions it has fetched. Then the raw instructions are transferred to an instruction decoder, #503, where it determines what type of instruction has been fetched. #504, shows a mechanism for executing instructions. This may include loading data into a register from memory, #501, storing data back to memory from a register, or performing some type of arithmetic or logical operation. This exact type of operation to be performed has been previously determined by the instruction decoder. The long displacement instructions described in this invention would be executed here. If the long displacement instructions are being executed natively on a computer system, then this diagram is complete as described above. However, if an instruction set architecture, containing long displacement instructions, is being emulated on another computer, the above process would be implemented in software on a host computer, #505. In this case, the above stated mechanisms would typically be implemented as one or more software subroutines within the emulator software. In both cases an instruction is fetched, decoded and executed.

More particularly, these architected instructions can be used with a computer architecture with existing instruction formats with a 12 bit unsigned displacement used to form the operand storage address and also one having additional instruction formats that provide a additional displacement bits, preferably 20 bits, which comprise an extended signed displacement used to form the operand storage address. These computer architected instructions comprise computer software, stored in a computer storage medium, for producing the code running of the processor utilizing the computer software, and comprising the instruction code for use by a compiler or emulator/interpreter which is stored in a computer storage medium 501, and wherein the first part of the instruction code comprises an operation code which specified the operation to be performed and a second part which designates the operands for that participate. The long displacement instructions permit additional addresses to be directly addressed with the use of the long displacement facility instruction.

As illustrated by Fig. 15, these instructions are executed in hardware by a processor or by emulation of said instruction set by software executing on a computer having a different native instruction set.

In accordance with the computer architecture of the preferred embodiment the displacement field is defined as being in two parts, the least significant part being 12 bits called the DL, DL1 for operand 1 or DL2 for operand 2, and the most significant part being 8 bits called the DH, DH1 for operand 1 or DH2 for operand 2.

Furthermore, the preferred computer architecture has an instruction format such that the opcode is in bit positions 0 through 7 and 40 through 47, a target register called R1 in bit positions 8 through 11, an index register called X2 in bit positions 12 through 15, a base register called B2 in bit positions 16 through 19, a displacement composed of two parts with the first part called DL2 in bit positions 20 through 31 and the second part called DH2 in bit positions 32 through 39.

This computer architecture has an instruction format such that the opcode is in bit positions 0 through 7 and 40 through 47, a target register called R1 in bit positions 8 through 11, an source register called R3 in bit positions 12 through 15, a base register called B2 in bit positions 16 through 19, a displacement composed of two parts with the first part called DL2 in bit positions 20 through 31 and the second part called DH2 in bit positions 32 through 39.

Furthermore, our computer architecture instructions having a long displacement facility has an instruction format such that the opcode is in bit positions 0 through 7 and 40 through 47, a target register called R1 in bit positions 8 through 11, a mask value called M3 in bit positions 12 through 15, a base register called B2 in bit positions 16 through 19, a displacement composed of two parts with the first part called DL2 in bit positions 20 through 31 and the second part called DH2 in bit positions 32 through 39.

As illustrated, our preferred computer architecture with its long displacement facility has an instruction format such that the opcode is in bit positions 0 through 7 and 40 through 47, an immediate value called 12 in bit positions 8 through 15, a base register called B2 in bit positions 16 through 19, a displacement composed of two parts with the first part called DL1 in bit positions 20 through 31 and the second part called DH1 in bit positions 32 through 39.

Our long displacement facility computer architecture operates effectively when using new instructions which are created that only use the instruction format with the new 20 bit unsigned displacement.

A specific embodiment of our computer architecture utilizes existing instructions which have the instruction formats that only have the 12 bit unsigned displacement and are now defined to be in the new instruction formats to have either the existing 12 bit unsigned displacement value when the high order 8 bits of the displacement, field DH, are all zero, or a 20 bit signed value when the high order 8 bits of the displacement, field DH, is non-zero.

## Claims

1. A method for executing a machine instruction in a central processing unit, the method comprising the steps of:
fetching a signed displacement machine instruction for execution, the signed displacement machine instruction being defined for computer execution according to a computer architecture, the signed displacement machine instruction comprising an opcode field, an operand base address field and a signed displacement field containing a signed displacement value, **characterised in that** the sign of the signed displacement value is situated between two portions of the value;
obtaining an operand base address from a location specified by the operand base address field;
if the signed displacement field contains a negative displacement value having a magnitude, arithmetically subtracting the magnitude of the signed displacement value from the operand base address to determine an address of an operand;
if the signed displacement field contains a positive displacement value having a magnitude, artihmetically adding the magnitude of the signed displacement value to the operand base address to determine the address of the operand; and
performing a function defined by the opcode field, wherein the function uses the operand at the determined address.

2. A computer program comprising instructions for carrying out all the steps of the method according to claim 1, when said computer program is executed on a computer system.

3. An system comprising means adapted for carrying out all the steps of the method according to claim 1.
